# EUROPEAN PATENT SPECIFICATION

(11) **EP 1 660 981 B1**
(45) Date of publication and mention of the grant of the patent: **23.07.2008**
(21) Application number: 04744298.3
(22) Date of filing: 17.08.2004
(51) Int. Cl.: G06F 3/033, G09G 3/36, G02F 1/1362

(54) **TOUCH-INPUT ACTIVE MATRIX DISPLAY DEVICE**
BERÜHRUNGSEMPFINDLICHER BILDSCHIRM MIT AKTIVMATRIXANZEIGE
DISPOSITIF D'AFFICHAGE A MATRICE ACTIVE ET A ENTREE TACTILE

(30) Priority: 23.08.2003 GB 0319910
(43) Date of publication of application: 31.05.2006
(73) Proprietor: Koninklijke Philips Electronics N.V., 5621 BA Eindhoven (NL)
(72) Inventor: DESTURA, Galileo, J.A., Philips Intell.Prop.&Stand, Redhill, Surrey RH1 5HA (GB); HECTOR, Jason R., Philips Intell.Prop.&Standards, Redhill, Surrey RH1 5HA (GB); ROOSENDAAL, Sander J., Philips Intell.Prop.&Stand., Redhill, Surrey RH1 5HA (GB)
(74) Representative: Damen, Daniel Martijn
(86) International application number: PCT/IB2004/002680
(87) International publication number: WO 2005/020058

(56) References cited:
- US-A- 4 345 248
- US-B1- 6 501 529

## Description

The invention relates to a display device having touch input functionality and especially to an active matrix display device comprising a plurality of pixels arranged in a row and column array. In particular, the invention relates to the sensing of touch input.

The use of touch-input display devices is becoming increasingly common in today's society in which quick and easy user-interaction with displayed information is desirable. Such display devices may be employed as part of public information sources, in control devices for large machinery, and in small hand-held devices such as mobile phones and PDAs for example. Touch-input functionality integrated onto a display can remove the requirement for peripheral user-input devices such as a mouse and/or a keyboard thus making the overall apparatus less cumbersome.

For the purposes of this specification, the term "touch-input" will include both pressure sensitive touch-input and optical touch-input. For example, this includes user-input to a display device from a user's finger, a stylus, pen or other such apparatus which touches a display device and either applies pressure or emits light at a point thereon.

Various display types are suitable for integration with touch-input displays. Flat panel type displays are particularly versatile as they are relatively lightweight and can be incorporated into small devices such as PDAs. Examples of flat panel displays include active matrix displays such as active matrix liquid crystal displays (AMLCDs), active matrix electroluminescent displays and electrophoretic displays. Another benefit of flat panel displays having touch-input functionality is the close proximity of the drive electronics to the touch-input sensors thereby allowing short interconnections therebetween. By way of example, one approach has been to position a transparent sensor array over the display surface. In this case, touch-input to the sensor array is outputted via connections from the edge of the sensor array.

However, by placing the sensor array in the viewing path of the user in this way, the quality of the viewed image is often reduced. Issues concerning dirt particles becoming trapped between the two bonded surfaces make this approach unfavourable.

US-5,610,629 discloses a system for pen-input to a liquid crystal display, wherein each pixel in the display has an associated sensor which responds to signals produced by a hand-held stylus. An example type of sensor disclosed is a piezo-electric sensor positioned beneath respective pixel cells. In this, a polyvinyl difluoride (PVDF) film is disposed between crossing sets of conductors. When the film is depressed at a point by the stylus, a voltage is created between crossing conductors at that point. This is detected via an associated sense line which is separate from the associated column address line.

EP-0,773,497 discloses a touch sensitive LCD wherein each LC cell performs the sensing function of the device. Touch-input to a pixel changes the capacitance of that cell which changes the charging characteristics. These characteristics are measured to detect touch-input. However, such changes in capacitance are relatively small and these can be difficult to detect with relatively high noise levels which are created by a constantly changing cell capacitance caused by the movement of the LC cells.

The Applicant's co-pending, unpublished European patent application, number EP03101085.3 (Our ref: PHNL030393), filed on 18^{th} April 2003, describes a flat display device having a display area and an electrically controlled input device such as a touch-pad. Separate conductor patterns are formed for controlling the display area and for transmitting input information from the input device. Information input is realised by applying a pressure on the selected area constituting the input device, so that electrical contact is established between two opposing substrates. Conducting particles can be arranged between the two substrates to allow the electrical contact therebetween.

From US patent No. 6,501,529 it is known to provide an LCD device with a touch input function. In this device first touch electrodes are provide adjacent the pixel electrodes on a first substrate on one side of the liquid crystal and corresponding second touch electrodes are provided adjacent common electrodes facing the pixel electrodes on the other side of the liquid crystal. The touch electrodes from a mesh-like resistance structure on each substrate and electrical resistance of this structure between the corners of the display and the touch position is used to measure the touch position. This document mentions the possibility that the position can still be measured from the resistances if the touch electrodes on one side of the liquid crystal (either on the side of the pixel electrodes or on the side of the common electrodes) can be replaced by the pixel electrodes or the common electrodes. This device requires extra touch conductors to perform the touch-input detection.

US patent No 4,345,248 discloses a display device with row and column conductors and access transistors to drive pixel electrodes. The device of this document also comprises photosensors between the row and column conductors, in parallel with the access transistors, for sensing positions where a light pen lights the display device.

The present invention seeks to provide an active matrix display device with integrated touch-input functionality.

The present invention seeks to minimise the extra features required to provide touch-input functionality to an active matrix display device.

The present invention seeks to simplify the sensing circuitry for touch- input active matrix display devices.

According to a first aspect of the present invention there is provided an active matrix display device as set forth in claim 1

By integrating the touch sensing onto the pixel electrodes of an active matrix display, the circuitry used to address the display can also be used to detect any touch-input to the display. This advantageously eliminates the requirement for extra conductors to perform the touch-input detection.

The electrical connection of the pixel electrodes to another electrode enables easy and definite detection of touch-input. This provides a low noise detection scheme which is sensitive only to intended touch-input by a user.

In a first preferred embodiment of the invention, the device further comprises a common electrode spaced from and overlying the array of pixel electrodes and is operable to create an electrical potential between itself and each pixel electrode, wherein each of said bodies electrically connects the associated pixel electrode to said common electrode in response to touch- input to the pixel.

The body may comprise a pressure-sensitive element having an electrical resistance which changes in response to applied pressure. A piezoresitive material having suitable electrical characteristics can be used therefore. The pressure-sensitive element preferably overlies and directly contacts said pixel electrode. This may be formed lithographically for example and serve as a spacer member between the pixel electrode and the common electrode to maintain a well defined gap therebetween when no pressure is applied.

Alternatively, the body may comprise a conducting material and be disposed between the pixel electrode and the common electrode. Each are preferably a conducting body formed lithographically and each having a height which is less than the electrode spacing, and is positioned between the opposing electrodes. Therefore, when pressure is applied to a pixel in response to touch-input, the spacing between the electrodes is reduced causing the conducting body to electrically connect the associated pixel electrode to the common electrode.

In a second preferred embodiment, the thin film transistor of each pixel has a gate terminal connected to an associated select conductor to which gate voltages can be applied to control the supply of data voltages to the respective pixel electrode, and wherein each of said bodies electrically connects the associated pixel electrode to the associated select conductor in response to touch-input to the pixel. The touch-responsive connection between the pixel electrodes and the associated select conductor provides an alternative method of sensing touch-input to an active matrix display device. By effectively providing a switch therebetween, current from the associated select conductor passes via the pixel electrode of a touched pixel to the associated data conductor enabling detection of the touch-input.

Each body in this embodiment may comprise a pressure-sensitive element formed from a piezoresitive material for example. Touch-input to a pixel applies pressure to the pressure-sensitive element via the overlying layers thereby causing the resistance of the element to reduce such that electrical connection is made.

Alternatively, the body may comprise a photoconductive element having an electrical resistance which changes in response to light of a predetermined wavelength incident thereon. This light may be generated from a light-pen for example which is held be a user. In response to touch-input from the pen, the incident light causes the resistance of the element to reduce such that electrical connection is made.

In both cases the body can be formed lithographically such that the element overlies the respective pixel electrode and the associated select conductor.

In each of the preferred embodiments the display device further comprises driver circuitry connected to each data conductor, said circuitry being arranged to operate in an addressing mode for supplying data voltages to associated pixels during respective address periods, and a sensing mode for detecting touch-input to associated pixels during respective sensing periods. The driver circuitry comprises a respective buffer circuit connected to each data conductor, each buffer circuit including an analogue to digital (A/D) converter serving to measure the current through the respective data conductor during said sensing period. Each A/D converter may be a simple single bit detector which sends either a"0"ora"1" signal to the control software depending on whether or not there is touch-input to the associated pixel. Advantageously, this requires only a small bandwidth and simple electronic circuitry to deliver the touch-input sensing signals to the control software.

According to a third aspect of the present invention there is provided a method according to claim 11.

In each of the preferred embodiments, the pixels are selected one row at a time during respective row periods to allow data voltages on the data conductors to be applied to the associated pixel electrodes on the selected row, and wherein each row period comprises an address period and a sensing period. Each row period is sub-divided into an address period, during which the pixels in the selected row are addressed, and a sensing period during which any touch-input to pixels in that row is detected. Touch-sensing is preferably carried out at the end of each row period such that each sensing period follows an address period.

Detection of the touch-input during the sensing periods is carried out by driver circuitry connected to each of the data conductors. This may involve integrating the current on each of said data conductors for the duration of the respective sensing periods. By integrating the measured currents on the data conductors over each row period, an average can be calculated in order to remove noise, therefore an accurate detection of any touch-input can be achieved.

Embodiments of the invention will now be described by way of example with reference to the accompanying drawings, in which:
Figure 1 shows schematically part of the active plate of an active matrix liquid crystal display device in accordance with the present invention;
Figure 2 is a plan view of a touch-input responsive pixel in a first embodiment of the invention;
Figure 3 is a cross-sectional view along the line A-A of the pixel shown in Figure 2;
Figure 4 shows, in schematic form, the circuitry layout of part of the active matrix display device of the first embodiment of the invention;
Figure 5 shows various plots for various voltage and currents present in the circuit of Figure 4 during use;
Figure 6 is a plan view of a touch-input responsive pixel in a second embodiment of the invention;
Figure 7 is a cross-sectional view along the line B-B of the pixel shown in Figure 6;
Figure 8 is a plan view of a touch-input responsive pixel in a third embodiment of the invention;
Figure 9 is a cross-sectional view along the line C-C of the pixel shown in Figure 8; and,
Figure 10 shows, in schematic form, the circuitry layout of part of the active matrix display device of the third embodiment of the invention.

It should be noted that the figures are diagrammatic and not drawn to scale. Relative dimensions and proportions of parts of these figures have been shown exaggerated or reduced in size, for the sake of clarity and convenience in the drawings. The same reference numbers are used throughout the Figures to denote the same or similar parts.

The present invention is applicable to various active matrix display devices. The following specific embodiments will describe the invention in relation to an active matrix liquid crystal display (AMLCD) device by way of example only. It will be appreciated that other types of display device can be employed.

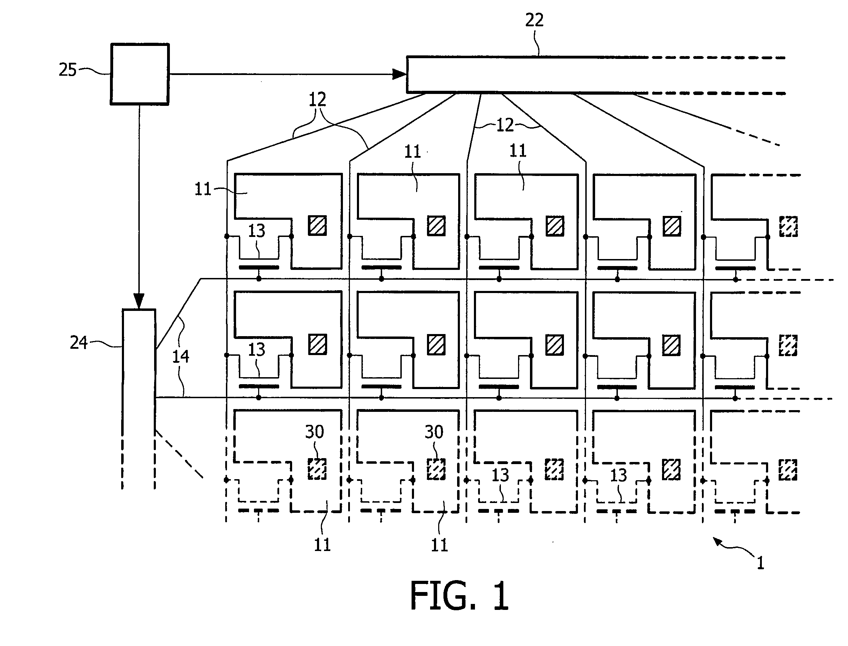

Figure 1 shows schematically part of an active plate 1 for an AMLCD device which comprises a row and column array of pixels. Each pixel comprises a pixel electrode 11 supported on the active plate 1. Data conductors 12 are carried on the active plate 1, each serving to supply data voltages to respective columns of pixel electrodes. Each pixel electrode 11 is connected to its associated data conductor 12 via a thin film transistor (TFT) 13 each having a source, a gate and a drain terminal. The source terminal of each TFT is connected to the associated data conductor 12. The drain terminal is connected to the respective pixel electrode 11. Select conductors 14 are also carried on the active plate 1, each serving to supply gate voltages to the gate terminals of TFTs 13 in respective rows.

The pixel electrodes 11, data conductors 12, select conductors 14 and the TFTs 13 of the active plate 1 are formed on a substrate using conventional thin film processing techniques involving the deposition and photolithographic patterning of various insulating, conducting and semiconducting layers, for example by a CVD process.

Driver circuitry carried on the active plate 1 includes a column driver 22 and a row driver 24. Video data signals and control signals are supplied to the driver circuitry by a control unit 25. The column driver 22 is connected to each data conductor 12 at one end thereof. The row driver 24 is connected to each select conductor 14. It will be appreciated that the driver circuitry can be formed of TFTs on the substrate of the active plate or formed of ICs connected to the row and column array via a series of connections.

Gate voltages applied to the gate terminals of respective TFTs 13 serve to control the supply of data voltages from the associated data conductors 12 to the respective pixel electrodes 11 by turning on, or selecting, the TFTs 13 one row at a time during respective address periods.

The AMLCD device of Figure 1 also comprises a passive plate (not shown) which overlies the active plate 1 and sandwiches a layer of liquid crystal (LC) material therebetween. On it's inner surface the passive plate carries a common electrode which is continuous across the area of the display. The common electrode, which is spaced from and overlies the array of pixel electrodes 11, is operable to create an electrical potential between itself and each pixel electrode 11. This potential serves to modulate the transmissivity of the LC material sandwiched therebetween.

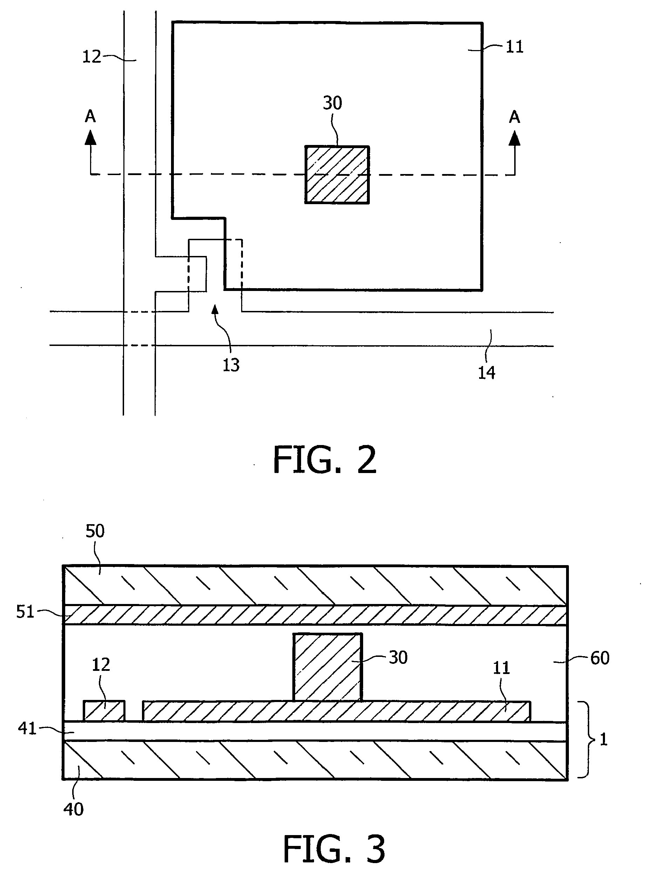

Each pixel in the array further comprises a body which electrically connects the associated pixel electrode 11 to another electrode in response to touch-input to the pixel. Figure 1 shows each body as a lithographically defined conducting body 30 in accordance with a first embodiment of the invention which will now be described in more detail with reference to Figures 2 and 3.

Figures 2 shows, in plan-view, a touch-input responsive pixel of the first embodiment which is responsive to pressure-based touch-input. The TFT 13 shown is a bottom-gate type by way of example only. Only the electrode pattern of the pixel is shown for ease of understanding. At least one insulating layer (not shown) is present between the underlying select conductor 14 and the data conductor 12 to serve as a crossover dielectric. Similarly, the source and drain electrodes of the TFT 13 are insulated from the gate electrode by a gate dielectric (not shown) which may be provided by the same layer as the crossover dielectric.

Figure 3 is a cross-sectional view of the pixel along the line A-A shown in Figure 2 intersecting the data conductor 12, the pixel electrode 11 and the conductive body 30. The substrate 40 of the active plate can be seen in Figure 3 with the crossover dielectric 41 disposed thereon.

A second substrate 50 is spaced from the active plate 1. The common electrode 51 is carried on the inner surface of the second substrate 50 and extends over the area of the display so as to form the second electrode for each pixel in the array. Connections to the edge of the common electrode 51 allow voltages to be applied during operation in order to create an electrical potential between itself and each pixel electrode 11. This potential serves to modulate the sandwiched layer of LC material 60 in accordance with applied data signals. Together with other layers (not shown), such as a colour filter, a polariser and an alignment layer, the substrate 50 and common electrode 51 form the passive plate.

The conducting body 30 is disposed between the pixel electrode 11 and the common electrode 51. During manufacture, the body is formed on the pixel electrode using lithographic definition, having a thickness which is less than that of the cell gap, and is preferably formed of a conducting polymer composite material. Examples of such materials can be found at www.zipperling.de/Research and include a mixture of a non-conductive polymer binder and polyaniline, a conductive polymer. The body is shaped as a cuboid although it is envisaged that the conductive material could also be used to form various different shaped bodies such as pyramid-shaped. The gap between the top of the body and the common electrode 51 may vary and will depend on the flexibility of the substrate 50 for example.

Instead of the lithographically defined bodies 30 described above, conductive spheres could instead be formed of a conducting polymer and having a diameter which is less than that of the cell gap. It will also be appreciated that the lithographically defined bodies could instead be formed on, and therefore contact, the common electrode 51 during manufacture. In this case, upon touch-input to the pixel, the conductive body 30 would be caused to contact the underlying pixel electrode 11. Alternatively, the body can be formed of an insulating polymer and then coated with a conducting polymer.

Touch-input to the pixel applies pressure to the second substrate 50. This pressure causes the substrate 50 to bend such that the cell gap (the separation between the pixel electrode 11 and the common electrode 51) reduces. If enough pressure is applied, the common electrode 51 touches the conducting body 30 so that electrical connection is made between the pixel electrode 11 and the common electrode 51 via the conducting body 30. This connection is detectable by the address circuitry associated with the pixel.

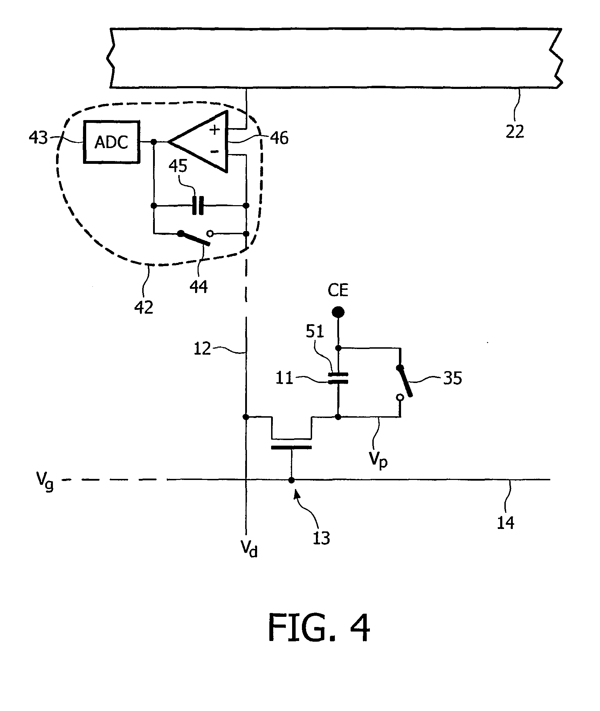

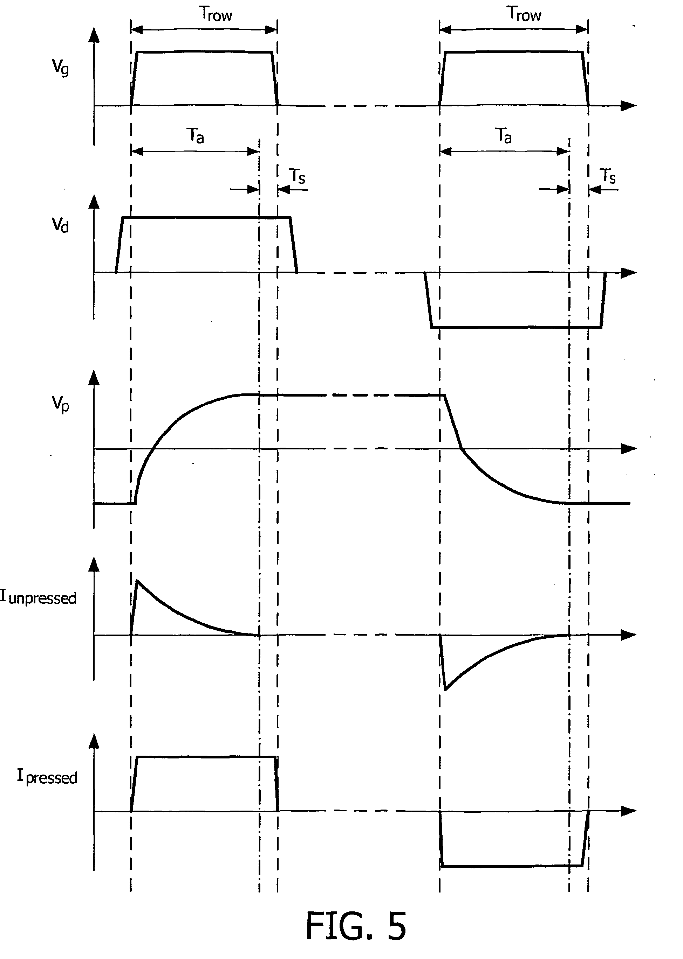

With reference to Figures 4 and 5, the addressing of a pixel and the sensing of touch-input to that pixel in accordance with the invention will now be described. The address circuitry associated with the pixel is shown in Figure 4 in schematic form. The connection made between the pixel electrode 11 and the common electrode 51 in response to touch-input is represented as a switch 35. It will be appreciated that the switch 35 is normally open during operation (no touch-input). The pixel is supplied with data voltages by driver circuitry connected to the data conductor 12.

The driver circuitry comprises a respective buffer circuit 42 which is supplied with data voltages from the column driver 22. An analogue to digital converter (ADC) 43 is included in the buffer circuit and serves to convert the measured current through the data conductor 12 to a digital signal. The buffer circuit further comprises a sensing switch 44 and a capacitor 45 each connected between the associated data conductor 12 and the ADC 43. These serve to integrate the current through the associated data conductor 12. The switch 44 enables resetting of this integrating circuit. A respective output of the column driver 22 is connected to one input of an operational amplifier (op-amp) IC 46. The associated data conductor 12 is connected to a second input of the IC 46. The ADC 43 is connected to the output of the IC 46.

The driver circuitry is arranged to operate in an addressing mode for supplying data voltages to associated pixels during respective address periods, and a sensing mode for detecting touch-input to associated pixels during respective sensing periods. The array of pixels is addressed one row at a time during respective row periods as with conventional active matrix addressing schemes. However, each row period is divided into an address period and a sensing period. For the duration of each row period, a row of pixels is selected by applying a gate voltage to the associated select conductor 14.

Figure 5 shows various voltage and current levels present on parts of the address circuitry associated with the pixel shown in Figure 4. The gate voltage V_{g} is high for the row period Tᵣ. This is generated by the row driver 24 and applied to the gate terminal of the TFT 13 via the select conductor 14 causing the TFT to turn on. This allows the data voltage V_{d}, present on the data conductor 12, to be applied to the pixel electrode via the TFT 13. Due to the relatively large capacitance of the pixel cell, the voltage on the pixel electrode Vp gradually increases throughout the row period Tᵣ until it reaches the data voltage V_{d}.

If the pixel is not pressed (no touch-input), then the current flowing on the data conductor decreases throughout the row period Tᵣ as the pixel electrode voltage approaches the data voltage, with the current I tending to zero towards the end of the row period Tᵣ. However, if the pixel is pressed (by touch-input) switch 35 can be considered as effectively closed. In this case, the pixel voltage Vₚ does not increase and current flows from the data conductor 12 to the common electrode 51 for the duration of the row period Tᵣ. The finite on-resistance of the TFT (in the Mega ohm range for amorphous silicon TFTs) ensures that the current flowing on the data conductor upon touch-input is not excessively high.

From this difference in current level present on the data conductor which is dependant on whether there is any touch-input to the pixel, the inventors have realised the need to detect touch-input to the pixel towards the end of the row period Tᵣ. Therefore, each sensing period Tₛ follows an address period Tₐ.

During the address period Tₐ, the buffer circuit 42 serves to supply data voltages to the associated pixel electrode 11 via the associated data conductor 12. The sensing switch 44 remains closed for the duration of the address period thereby switching off the current-sensing function of the buffer circuit 42. The address period is typically 20microsecond in duration but will of course vary depending on the field rate (the frequency at which the array is addressed) and the number of rows in the array. For instance, the address period will be longer for smaller displays.

At the end of the address period the sensing switch 44 is opened thereby switching on the current-sensing function of the buffer circuit 42 and defining the start of the sensing period Tₛ.

During the sensing period Tₛ, the current on the associated data conductor 12 is measured. A high current on the data conductor at the end of the row period indicates that touch-input has occurred because there is a connection between the pixel electrode 11 and the common electrode 51. Conversely, a low current, or even zero, indicates that there is no connection across the pixel cell and therefore no touch-input. The connection is detectable via the associated data conductor 12. With the sensing switch 44 open, any current flowing on the data conductor 12 causes the capacitor 45 to charge. By offsetting the ADC at the start of the sensing period, it only measures any additional voltage beyond the previously-addressed data voltage. Any charge stored on the capacitor 45 is measured by the ADC 43 as a voltage present on the IC output 46. This voltage is equal to the voltage across the capacitor 45 plus the data voltage supplied by the column driver. The sensing period is typically 2microsecond in duration but will of course vary depending on the values of the TFT's on-resistance and the capacitor 45. From the measurement made by the ADC 43 at the end of each row period, a decision on the occurrence of touch-input is made based on a predetermined threshold of the current flow on the data conductor 12 which corresponds to a voltage measured by the ADC. The threshold decision can either be implemented in hardware, through the ADC circuitry, or software, through the driver circuitry. The former is preferred as it minimises the bandwidth requirements for transmitting the touch-input information from the detection circuitry.

Each data conductor 12 has a corresponding buffer circuit connected thereto. Touch-input detection is therefore carried out for every pixel in a row for each row period. The process is repeated for each row of pixels as they are addressed in sequence, each row period comprising an address period followed by a sensing period. The detection of touch-input is therefore a continuous process which is carried out throughout the operation of the display.

The two-mode operation of the driver circuitry enables touch-input detection without the need for extra address conductors to the pixels. The address circuitry associated with each pixel serves both to address the pixel electrodes 11 during respective address periods and to sense any touch-input to the pixel during respective sensing periods.

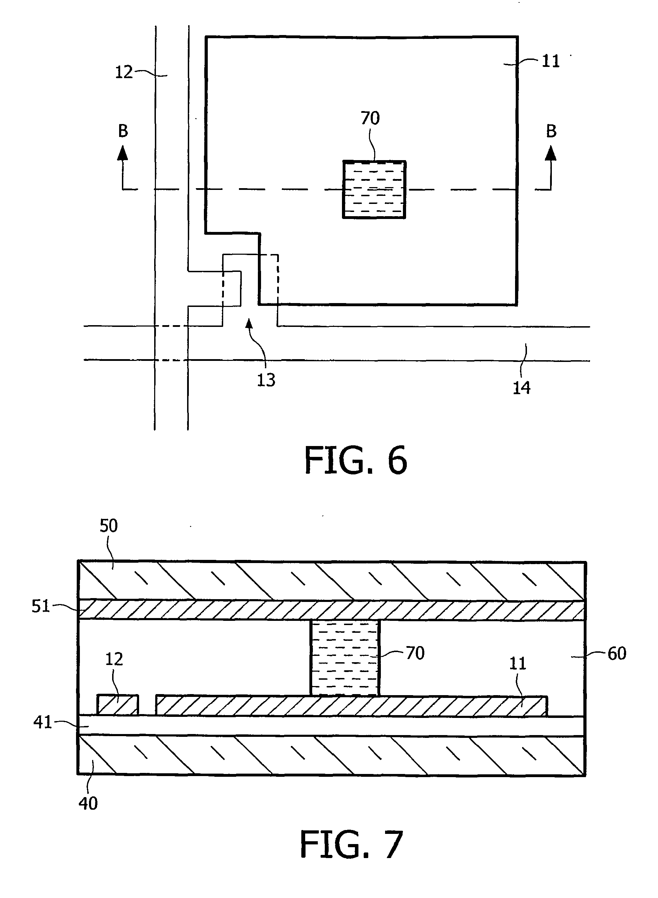

A second embodiment of the invention will now be described with reference to Figures 6 and 7. Again, the AMLCD device of this embodiment is responsive to pressure-based touch-input. The arrangement of the active plate, passive plate, address and driver circuitry is much the same as for the above-described embodiment. However, instead of the body comprising a conducting material, each pixel comprises a pressure-sensitive element 70 having an electrical resistance which changes in response to applied pressure. The pressure-sensitive element 70 is formed of a piezoresistive material which has a resistance which is dependant on the fractional compression of the material. When pressure is applied to such a material, the resistance decreases significantly.

Figure 6 shows a plan view of the pixel layout wherein the pressure-sensitive element 70 is disposed on and near the centre of the pixel electrode 11. The actual position of the pressure-sensitive element 70 on the pixel electrode is not critical however. Figure 7 shows a cross-sectional view of the pixel along the line B-B of Figure 6 which intersects the pressure-sensitive element 70.

Following the formation of the pixel electrodes 11 and the data conductors 12, respective pressure-sensitive elements 70 are formed by lithographic definition on the pixel electrodes 11 of each pixel. It is envisaged that the piezoresistive material may be UV curable. In this case, the piezoresistive material is spincoated as a layer, having a thickness which is equal to that of the intended cell gap, over the active plate. The layer is then exposed to UV through a mask leaving the individual pressure-sensitive elements 70.

It can be seen from Figure 7 that the pressure-sensitive element 70 of each pixel makes contact with the common electrode 51 through the LC material 60. When no pressure is applied to the pixel via the passive plate (no touch-input) the pressure-sensitive element 70 should have a very high resistance, in the order of >10¹²ohms. In response to touch-input to the pixel, the resistance of the pressure-sensitive element 70 reduces significantly to a value which is much less than the ON-resistance of the TFT 13, in the order of <10⁶ohms thereby making an electrical connection between the pixel electrode 11 and the common electrode 51. An example polymer material having these properties is described in US patent number US-6,291,568 to which reference is invited.

Addressing the pixel of Figures 6 and 7 is performed in a similar manner to that described in relation to the first embodiment wherein the pressure-sensitive element 70 can also be represented by switch 35 in the circuit diagram of Figure 4.

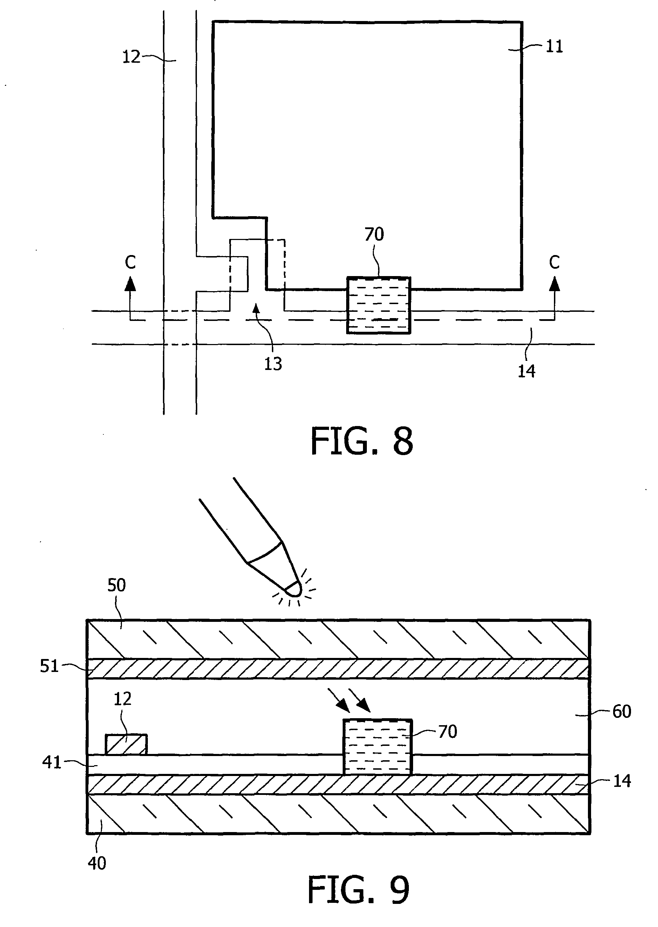

A third embodiment of the invention will now be described with reference to Figures 8, 9 and 10. The AMLCD device of this embodiment is responsive to optical touch-input from, say, a light pen for example. A touch-input responsive pixel arrangement is shown in Figure 8 which has a pixel electrode 11, an associated data conductor 12, a thin film transistor 13 having a drain terminal connected to the pixel electrode 11, and an associated select conductor 14, each being arranged on a substrate in a similar fashion to that of the pixel in the first embodiment. The thin film transistor 13 has a gate terminal to which gate voltages can be applied to control the supply of data voltages to the pixel electrode 11. The gate voltages are generated by the row driver and supplied via the associated select conductor 14 to the gate terminal of the TFT 13. The pixel further comprises a body which electrically connects the pixel electrode to said gate terminal in response to touch-input to the pixel. The body comprises a photoconductive element 80 having an electrical resistance which changes in response to light of a predetermined wavelength incident thereon.

In this embodiment, the photoconductive element 80 is positioned so that it partly overlaps both the pixel electrode 11 and the select conductor 14. A photoconductive material is used to form the photoconductive element 80 so that the element has an electrical resistance which changes in response light of a predetermined wavelength incident thereon. This light is typically generated by a light pen held by the user and used in conjunction with the display screen. Examples of suitable photoconductive materials are described in a paper by R.M, Schaffert, "A New High-sensitivity Organic Photoconductor for Electrophotography", IBM J. Res Development, January 1971, pages 75 to 89 to which reference is invited.

Figure 9 shows a cross-sectional view of the pixel along the line C-C of Figure 8 which intersects the photoconductive element 80 and the select conductor 14. A light pen 95, held and operated by a user, emits light of a predetermined wavelength 100 which is incident on the photoconductive element 80. The passive plate is formed mostly of transparent materials which allows passage of the light 100. As can be seen from Figure 9, the photoconductive element 80 contacts the select conductor 14.

When the light pen is not in the vicinity of the pixel (no touch-input) the photoconductive element 80 should have a very high resistance, in the order of >10¹²ohms. This maintains the electrical insulation between the pixel electrode 11 and the select conductor 14. Touch-input to the pixel from the light pen 95 generates light which is incident on the photoconductive element 80 via the passive plate. In response to touch-input to the pixel, the resistance of the photoconductive element 80 reduces significantly to a value which is much less than the ON-resistance of the TFT 13, in the order of <10⁶ohms thereby electrically connecting the pixel electrode 11 to the select conductor 14. This connection is detectable by the address circuitry associated with the pixel.

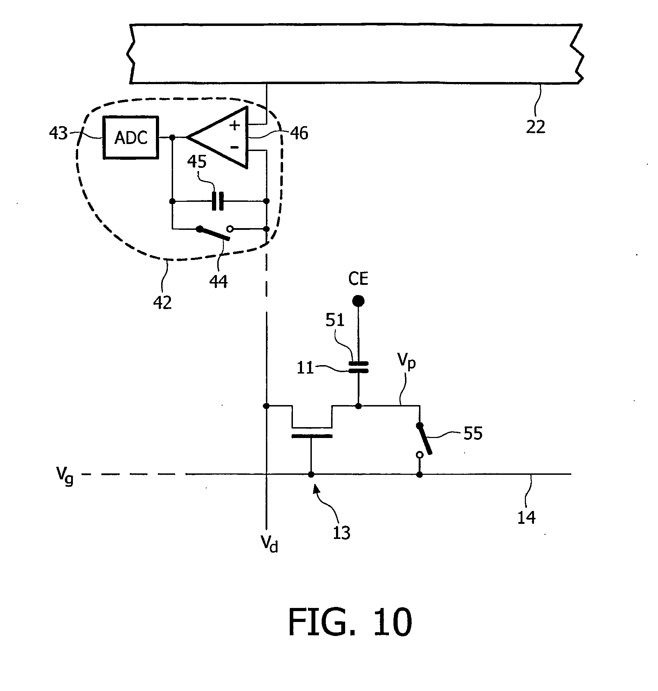

Figure 10 shows the address circuitry associated with the pixel of the third embodiment. The connection made between the pixel electrode 11 and the select conductor 14 in response to touch-input is represented as a switch 55. It will be appreciated that the switch 55 is normally open during operation (no touch-input). The pixel is supplied with data voltages by driver circuitry connected to the data conductor 12.

The driver circuitry comprises a respective buffer circuit 42 which is supplied with data voltages from the column driver 22. The buffer circuit 42 is arranged and operates in a similar manner to that described above in relation to the first embodiment. Similarly, the driver circuitry is arranged to operate in an addressing mode for supplying data voltages to associated pixels during respective address periods, and a sensing mode for detecting touch-input to associated pixels during respective sensing periods. The voltage and current levels shown in the plots of Figure 5 also apply for the pixel circuit of Figure 10 and will be used to explain the sensing of touch-input to the pixel of the third embodiment.

The gate voltage V_{g} is high for the row period Tᵣ and is typically 20V. This is generated by the row driver 24 and applied to the gate terminal of the TFT 13 via the select conductor 14 causing the TFT to turn on. This allows the data voltage V_{d}, present on the data conductor 12, to be applied to the pixel electrode via the TFT 13. The data voltage typically lies in the range from -5 to +5 volts. Due to the relatively large capacitance of the pixel cell, the voltage on the pixel electrode Vp gradually increases throughout the row period Tᵣ until it reaches the data voltage V_{d}.

As mentioned above, when light is incident on the photoconductive element 80 in a pixel, an effective electrical connection is made between the pixel electrode 11 and the associated select conductor 14. Due to the potential difference between the associated data conductor 12 and the associated select conductor 14, a current is caused to flow on the data conductor 12 when touch-input occurs. This current is measured during a respective sensing period Tₛ to detect touch-input. As with the first embodiment, each sensing period Tₛ follows an address period Tₐ.

During the address period Tₐ, the buffer circuit 42 serves to supply data voltages to the associated pixel electrode 11 via the associated data conductor 12. The sensing switch 44 remains closed for the duration of the address period thereby switching off the current-sensing function of the buffer circuit 42. The address period is typically 20µs in duration but will of course vary depending on the field rate (the frequency at which the array is addressed).

At the end of the address period the sensing switch 44 is opened thereby switching on the current-sensing function of the buffer circuit 42 and defining the start of the sensing period Tₛ.

During the sensing period Tₛ, the current on the associated data conductor 12 is measured. A high current on the data conductor at the end of the row period indicates that touch-input has occurred because there is a connection between the pixel electrode 11 and the select conductor 14. Conversely, a low current, or even zero, indicates that there is no connection between the pixel electrode 11 and the select conductor 14 and therefore no touch-input. Therefore, the connection is detectable via the associated data conductor 12. With the sensing switch 44 open, any current flowing on the data conductor 12 causes the capacitor 45 to charge. Any charge stored on the capacitor 45 is measured by the ADC 43. The sensing period is typically 2microseconds in duration. From the measurement made by the ADC 43 at the end of each row period, touch-input to the pixel can be detected.

It is envisaged that the photoconductive elements 80 of the third embodiment could be replaced by pressure-sensitive elements formed of piezoresistive material in a similar manner to those of the first and second embodiments. Advantageously, this would remove the requirement of the light pen 95. Pressing the pixel applies pressure to the passive plate. This pressure is transferred through the LC material 60 to the pressure sensitive element.

The above-described embodiments have comprised a touch-input AMLCD device. However, it is envisaged that other types of active matrix display devices can be employed to enable the invention. These include electrophoretic displays which comprise a fluid layer that supports ink capsules. This layer is sandwiched between the active and passive plates in a similar manner to the LC layer 60 of the AMLCD devices described above. When a pixel is pressed, for example, the touch action's compressive force can be transferred to a pressure-sensitive element disposed on the pixel electrode through the ink capsules. In the case of optical touch-input, the light generated by a light pen would be transmitted through the ink layer to the photoconductive elements.

In summary, an active matrix display device having touch input functionality is provided. The device comprises a plurality of pixels arranged in a row and column array, each pixel comprising a pixel electrode to which data voltages can be supplied by an associated data conductor via a respective thin film transistor having a drain terminal connected to the pixel electrode. The pixels each further comprise a body which electrically connects the associated pixel electrode to another electrode in response to touch-input to the pixel, the connection being detectable via the associated data conductor. The circuitry used to address the display can also be used to detect any touch-input to the display. This advantageously eliminates the requirement for extra conductors to perform the touch-input detection.

From reading the present disclosure, other variations and modifications will be apparent to persons skilled in the art. Such variations and modifications may involve equivalent and other features which are already known in the art and which may be used instead of or in addition to features already described herein.

## Claims

1. An active matrix display device comprising a plurality of pixels arranged in a row and column array, each pixel comprising a pixel electrode (11) to which data voltages (Vd) can be supplied by an associated data conductor (12) via a respective thin film transistor (13), wherein at least a proportion of the pixels each further comprise a body (30; 70; 80) which electrically connects the associated pixel electrode to another electrode (51; 14) in response to touch-input to the pixel, **characterized in that** the other electrode (51, 14) is an electrode used for effecting display of data by the pixel, the device being configured to detect said connection from current via the associated data conductor, the respective thin film transistor (13) and said body to the other electrode.

2. A device according to Claim 1, further comprising a common electrode (51) spaced from and overlying the array of pixel electrodes operable to create an electrical potential between itself and each pixel electrode, wherein the other electrode is the common electrode and each of said bodies electrically connects the associated pixel electrode to said common electrode in response to touch-input to the pixel.

3. A device according to claim 1, wherein the thin film transistor of each pixel has a gate terminal connected to an associated select conductor (14) to which gate voltages (Vg) can be applied to control the supply of data voltages to the respective pixel electrode, and wherein the other electrode is the select conductor and each of said bodies (70) electrically connects the associated pixel electrode to the associated select conductor in response to touch-input to the pixel.

4. A device according to any one of Claims 1,2 or 3, further comprising driver circuitry connected to each data conductor, said circuitry being arranged to operate in an addressing mode for supplying data voltages to associated pixels during respective address periods(Ta), and a sensing mode for detecting touch-input to associated pixels during respective sensing periods (Ts).

5. A device according to Claim 4, wherein said driver circuitry comprises a respective buffer circuit (42) connected to each data conductor, each buffer circuit including an analogue to digital converter (43) serving to measure the current through the respective data conductor during said sensing period.

6. A device according to Claim 1, the device comprising
- a common electrode (51) spaced from and overlying the array of pixel electrodes operable to create an electrical potential between itself and each pixel electrode,
- select conductors (14), the thin film transistor of each pixel having a gate terminal connected to an associated select conductor (14) to which gate voltages (Vg) can be applied to control the supply of data voltages to the respective pixel electrode,
- driver circuitry operable in an addressing mode and a sensing mode, for supplying data voltages to the pixel electrodes and detecting touch input respectively, the driver circuit being configured to supply data voltages (Vd) to said pixel electrodes relative to the common electrode (51) via associated data conductors (12) during respective address periods (Ta); the driver circuit being configured to measure current from the common electrode or the select conductor via the body to the data conductor during respective sensing periods(Ts) to detect touch-input to the display.

7. A device according to Claim 6, wherein said pixels are arranged in a row and column array and the driver circuitry is configured to select one row at a time with the select electrodes during respective row periods(Tr) to allow data voltages on the data conductors to be applied to the associated pixel electrodes on the selected row, and wherein each row period comprises an address period(Ta) and a sensing period(Ts).

8. A device according to any one of Claims 1 to 5, wherein said body comprises a pressure-sensitive element (70) having an electrical resistance which changes in response to applied pressure.

9. A device according to Claim 2 or Claim 3, wherein said body comprises a photoconductive element (80) having an electrical resistance which changes in response to light of a predetermined wavelength incident thereon.

10. A device according to any one of Claims 1 to 5, wherein at least part of said body overlies and directly contacts said pixel electrode.

11. A device according to Claim 2, wherein said body comprises a conducting material (30) and is disposed between the pixel electrode and said second electrode.

12. A method of sensing touch-input to an active matrix display device comprising a plurality of pixels each comprising a pixel electrode (11) and, for at least a proportion of the pixels, a body (30; 70; 80) which electrically connects the pixel electrode to another electrode (51; 14) in response to touch-input to the pixel, the method comprising the steps of:
- supplying data voltages (Vd) to said pixel electrodes via associated data conductors (12) during respective address periods (Ta);
**characterized in that** the other electrode (51, 14) is an electrode used for effecting display of data by the pixel in the address periods, the method comprising
- measuring currents through each of said data conductors to the other electrode via the body during respective sensing periods(Ts) to detect touch-input to the display.

13. A method according to Claim 12, wherein said pixels are arranged in a row and column array and are selected one row at a time during respective row periods(Tr) to allow data voltages on the data conductors to be applied to the associated pixel electrodes on the selected row, and wherein each row period comprises an address period(Ta) and a sensing period(Ts).

14. A method according to Claim 13, wherein each sensing period follows an address period.

15. A method according to any one of Claims 12 to 14, wherein said measuring step comprises integrating the current on each of said data conductors for the duration of said respective sensing period.

## Patentansprüche

1. Aktivmatrixanzeigeeinrichtung mit einer großen Anzahl von Pixeln, die in einem Zeilen- und Spalten-Array angeordnet sind, wobei jedes Pixel eine Pixelelektrode (11) aufweist, der von einem zugeordneten Datenleiter (12) über einen jeweiligen Dünnschichttransistor (13) Datenspannungen (V_{d}) zugeführt werden können, wobei zumindest ein Teil der Pixel jeweils weiterhin einen Körper (30; 70; 80) aufweist, welcher die zugeordnete Pixelelektrode in Reaktion auf eine Berührungseingabe in das Pixel mit einer anderen Elektrode (51; 14) elektrisch verbindet, **dadurch gekennzeichnet, dass** die andere Elektrode (51, 14) eine Elektrode ist, die eingesetzt wird, um die Anzeige von Daten durch das Pixel zu bewirken, wobei die Einrichtung so konfiguriert ist, dass sie die Verbindung vom Strom über den zugeordneten Datenleiter, den jeweiligen Dünnschichttransistor (13) und den Körper zu der anderen Elektrode detektiert.

2. Einrichtung nach Anspruch 1, welche weiterhin eine von dem Array von Pixelelektroden beabstandete und über diesem angeordnete, gemeinsame Elektrode (51) aufweist, welche so wirkt, dass sie ein elektrisches Potential zwischen sich und jeder Pixelelektrode erzeugt, wobei die andere Elektrode die gemeinsame Elektrode ist und jeder der Körper die zugeordnete Pixelelektrode in Reaktion auf eine Berührungseingabe in das Pixel mit der gemeinsamen Elektrode elektrisch verbindet.

3. Einrichtung nach Anspruch 1, wobei der Dünnschichttransistor jedes Pixels einen mit einem zugeordneten Auswahlleiter (14) verbundenen Gateanschluss aufweist, an den Gatespannungen (Vg) angelegt werden können, um die Zuführung von Datenspannungen zu der jeweiligen Pixelelektrode zu steuern, und wobei die andere Elektrode der Auswahlleiter ist und jeder der Körper (70) die zugeordnete Pixelelektrode in Reaktion auf eine Berührungseingabe in das Pixel mit dem zugeordneten Auswahlleiter elektrisch verbindet.

4. Einrichtung nach einem der Ansprüche 1, 2 oder 3, welche weiterhin eine Treiberschaltung aufweist, die mit jedem Datenleiter verbunden ist, wobei die Schaltung so vorgesehen ist, dass sie in einem Adressierungsmodus arbeitet, um zugeordneten Pixeln während jeweiliger Adressperioden (Tₐ) Datenspannungen zuzuführen, sowie in einem Abtastmodus arbeitet, um während jeweiliger Abtastperioden (Tₛ) eine Berührungseingabe in zugeordnete Pixel zu detektieren.

5. Einrichtung nach Anspruch 4, wobei die Treiberschaltung einen jeweiligen Pufferkreis (42) aufweist, welcher mit jedem Datenleiter verbunden ist, wobei jeder Pufferkreis einen Analog-Digital-Wandler (43) enthält, der dazu dient, während der Abtastperiode den Strom durch den jeweiligen Datenleiter zu messen.

6. Einrichtung nach Anspruch 1, wobei diese aufweist:
- eine von dem Array von Pixelelektroden beabstandete und über diesem angeordnete, gemeinsame Elektrode (51), welche so wirkt, dass sie ein elektrisches Potential zwischen sich und jeder Pixelelektrode erzeugt,
- Auswahlleiter (14), wobei der Dünnschichttransistor jedes Pixels einen mit einem zugeordneten Auswahlleiter (14) verbundenen Gateanschluss aufweist, an den Gatespannungen (Vg) angelegt werden können, um die Zuführung von Datenspannungen zu der jeweiligen Pixelelektrode zu steuern,
- Treiberschaltung, welche in einem Adressierungsmodus und einem Abtastmodus arbeiten kann, um den Pixelelektroden Datenspannungen zuzuführen bzw. eine Berührungseingabe zu detektieren, wobei die Treiberschaltung so konfiguriert ist, dass sie während jeweiliger Adressperioden (Tₐ) den Pixelelektroden relativ zu der gemeinsamen Elektrode Datenspannungen (V_{d}) über zugeordnete Datenleiter (12) zuführt, wobei die Treiberschaltung so konfiguriert ist, dass sie Strom von der gemeinsamen Elektrode oder dem Auswahlleiter über den Körper zu dem Datenleiter während jeweiliger Abtastperioden (Tₛ) misst, um eine Berührungseingabe in die Anzeige zu detektieren.

7. Einrichtung nach Anspruch 6, wobei die Pixel in einem Zeilen- und Spalten-Array angeordnet sind und die Treiberschaltung so konfiguriert ist, dass sie während jeweiliger Zeilenperioden (Tᵣ) mit den Auswahlelektroden jeweils eine Zeile auswählt, damit Datenspannungen an den Datenleitern an die zugeordneten Pixelelektroden der ausgewählten Zeile angelegt werden können, und wobei jede Zeilenperiode eine Adressperiode (Tₐ) und eine Abtastperiode (Tₛ) umfasst.

8. Einrichtung nach einem der Ansprüche 1 bis 5, wobei der Körper ein druckempfindliches Element (70) mit einem elektrischen Widerstand, der sich in Reaktion auf angewandten Druck verändert, umfasst.

9. Einrichtung nach Anspruch 2 oder Anspruch 3, wobei der Körper ein photoleitendes Element (80) mit einem elektrischen Widerstand, der sich in Reaktion auf darauf auffallendes Licht einer vorgegebenen Wellenlänge verändert, umfasst.

10. Einrichtung nach einem der Ansprüche 1 bis 5, wobei zumindest ein Teil des Körpers über der Pixelelektrode liegt und diese unmittelbar kontaktiert.

11. Einrichtung nach Anspruch 2, wobei der Körper ein leitendes Material (30) aufweist und zwischen der Pixelelektrode und der zweiten Elektrode angeordnet ist.

12. Verfahren zum Abtasten einer Berührungseingabe in eine AktivmatrixAnzeigeeinrichtung mit einer großen Anzahl von Pixeln, die jeweils eine Pixelelektrode (11) aufweisen und zumindest ein Teil der Pixel einen Körper (30; 70; 80) umfasst, der die Pixelelektrode in Reaktion auf eine Berührungseingabe in das Pixel mit einer anderen Elektrode (51; 14) elektrisch verbindet, wobei das Verfahren die Schritte des
- Zuführens von Datenspannungen (V_{d}) über zugeordnete Datenleiter (12) zu den Pixelelektroden während jeweiliger Adressperioden (Tₐ) umfasst,
**dadurch gekennzeichnet, dass** die andere Elektrode (51, 14) eine Elektrode ist, die eingesetzt wird, um die Anzeige von Daten durch das Pixel in den Adressperioden zu bewirken, wobei das Verfahren den Schritt des
- Messens von Strömen durch jeden der Datenleiter über den Körper zu der anderen Elektrode während jeweiliger Abtastperioden (Tₛ) umfasst, um eine Berührungseingabe in die Anzeige zu detektieren.

13. Verfahren nach Anspruch 12, wobei die Pixel in einem Zeilen- und Spalten-Array angeordnet sind und während jeweiliger Zeilenperioden (Tᵣ) jeweils eine Zeile ausgewählt wird, damit Datenspannungen an den Datenleitern an die zugeordneten Pixelelektroden der ausgewählten Zeile angelegt werden können, und wobei jede Zeilenperiode eine Adressperiode (Tₐ) und eine Abtastperiode (Tₛ) umfasst.

14. Verfahren nach Anspruch 13, wobei jede Abtastperiode auf eine Adressperiode folgt.

15. Verfahren nach einem der Ansprüche 12 bis 14, wobei der Messschritt das Integrieren des Stroms auf jedem der Datenleiter für die Dauer der jeweiligen Abtastperiode umfasst.

## Revendications

1. Dispositif d'affichage à matrice active comprenant une pluralité de pixels qui sont agencés dans un réseau de rangées et de colonnes, chaque pixel comprenant une électrode de pixel (11) à laquelle des tensions de données(Vd) peuvent être fournies par un conducteur associé de données (12) par le biais d'un transistor respectif à couche mince (13) dans lequel au moins une proportion des pixels comprennent chacun encore un corps (30; 70; 80) qui connecte électriquement l'électrode associée de pixel à une autre électrode (51; 14) en réaction à une entrée tactile au pixel, **caractérisé en ce que** l'autre électrode (51, 14) est une électrode qui est utilisée pour effectuer l'affichage de données par le pixel, le dispositif étant configuré de manière à détecter ladite connexion du courant par le biais du conducteur associé de données, du transistor respectif à couche mince (13) et dudit corps à l'autre électrode.

2. Dispositif selon la revendication 1, comprenant encore une électrode commune (51) étant espacée de et recouvrant le réseau d'électrodes de pixel qui est utilisable pour créer un potentiel électrique entre elle-même et chaque électrode de pixel, dans lequel l'autre électrode est l'électrode commune et dans lequel chacun desdits corps connecte électriquement l'électrode associée de pixel à ladite électrode commune en réaction à une entrée tactile au pixel.

3. Dispositif selon la revendication 1, dans lequel le transistor à couche mince de chaque pixel présente une borne de grille qui est connectée à un conducteur associé de sélection (14) auquel des tensions de grille (Vg) peuvent être appliquées pour commander la fourniture de tensions de données à l'électrode respective de pixel et dans lequel l'autre électrode est le conducteur de sélection et chacun desdits corps (70) connecte électriquement l'électrode associée de pixel au conducteur associé de sélection en réaction à une entrée tactile au pixel.

4. Dispositif selon l'une quelconque des revendications précédentes 1, 2 ou 3, comprenant encore des circuits d'attaque qui sont connectés à chaque conducteur de données, lesdits circuits étant agencés de manière à fonctionner dans un mode d'adressage pour fournir des tensions de données à des pixels associés pendant des périodes respectives d'adresse (Ta) et un mode de détection pour détecter une entrée tactile à des pixels associés pendant des périodes respectives de détection (Ts).

5. Dispositif selon la revendication 4, dans lequel lesdits circuits d'attaque comprennent un circuit tampon respectif (42) qui est connecté à chaque conducteur de données, chaque circuit tampon comprenant un convertisseur analogique-numérique (43) qui sert à mesurer le courant s'étendant à travers le conducteur respectif de données pendant ladite période de détection.

6. Dispositif selon la revendication 1, le dispositif comprenant:
- une électrode commune (51) étant espacée de et recouvrant le réseau d'électrodes de pixel qui sont utilisables pour créer un potentiel électrique entre elle-même et chaque électrode de pixel,
- des conducteurs de sélection (14), le transistor à couche mince de chaque pixel ayant une borne de grille qui est connectée à un conducteur associé de sélection (14) auquel des tensions de grille (Vg) peuvent être appliquées pour commander la fourniture de tensions de données à l'électrode respective de pixel,
- des circuits d'attaque qui sont utilisables dans un mode d'adressage et dans un mode de détection pour fournir des tensions de données aux électrodes de pixel et pour détecter une entrée tactile, respectivement, le circuit d'attaque étant configuré de manière à fournir des tensions de données (Vd) audites électrodes de pixel par rapport à l'électrode commune (51) par le biais des conducteurs associés de données (12) pendant des périodes respectives d'adresse (Ta); le circuit d'attaque étant configuré de manière à mesurer le courant s'étendant à partir de l'électrode commune ou du conducteur de sélection par le biais du corps vers le conducteur de données pendant les périodes respectives de détection (Ts) pour détecter l'entrée tactile à l'affichage.

7. Dispositif selon la revendication 6, dans lequel lesdits pixels sont agencés dans un réseau de rangées et de colonnes et dans lequel les circuits d'attaque sont configurés de manière à sélectionner une rangée à la fois avec les électrodes de sélection pendant des périodes respectives de rangée (Tr) pour permettre que des tensions de données sur les conducteurs de données soient appliquées aux électrodes associées de pixel sur la rangée sélectionnée, et dans lequel chaque période de rangée comprend une période d'adresse (Ta) et une période de détection (Ts).

8. Dispositif selon l'une quelconque des revendications précédentes 1 à 5, dans lequel ledit corps comprend un élément sensible à la pression (70) ayant une résistance électrique qui change en réaction à la pression appliquée.

9. Dispositif selon la revendication 2 ou selon la revendication 3, dans lequel ledit corps comprend un élément photoconducteur (80) ayant une résistance électrique qui change en réaction à la lumière d'une longueur d'onde prédéterminée qui y est incidente.

10. Dispositif selon l'une quelconque des revendications précédentes 1 à 5, dans lequel au moins une partie dudit corps recouvre et entre directement en contact avec ladite électrode de pixel.

11. Dispositif selon la revendication 2, dans lequel ledit corps comprend un matériau conducteur (30) et est disposé entre l'électrode de pixel et ladite deuxième électrode.

12. Procédé de détection d'une entrée tactile à un dispositif d'affichage à matrice active comprenant une pluralité de pixels qui comprennent chacun une électrode de pixel (11) et, pour au moins une proportion des pixels, un corps (30; 70; 80) qui connecte électriquement l'électrode de pixel à une autre électrode (51; 14) en réaction à l'entrée tactile au pixel, le procédé comprenant l'étape consistant à:
- fournir les tensions de données (Vd) audites électrodes de pixel par le biais des conducteurs associés de données (12) pendant les périodes respectives d'adresse (Ta); **caractérisé en ce que** l'autre électrode (51, 14) est une électrode qui est utilisée pour effectuer l'affichage de données par le pixel dans les périodes d'adresse, le procédé comprenant l'étape consistant à:
- mesurer les courants s'étendant à travers chacun desdits conducteurs de données vers l'autre électrode par le biais du corps pendant les périodes respectives de détection (Ts) pour détecter l'entrée tactile à l'affichage.

13. Procédé selon la revendication 12, dans lequel lesdits pixels sont agencés dans un réseau de rangées et de colonnes et sont sélectionnés d'une rangée à la fois pendant les périodes respectives de rangée (Tr) pour permettre que les tensions de données sur les conducteurs de données soient appliquées aux électrodes associées de pixel sur la rangée sélectionnée, et dans lequel chaque période de rangée comprend une période d'adresse (Ta) et une période de détection (Ts).

14. Procédé selon la revendication 13, dans lequel chaque période de détection suit une période d'adresse.

15. Procédé selon l'une quelconque des revendications précédentes 12 à 14, dans lequel ladite étape de mesure comprend l'intégration du courant sur chacun desdits conducteurs de données pendant la durée de ladite période respective de détection.
